# EUROPÄISCHE PATENTSCHRIFT

(11) **EP 1 283 335 B1**
(45) Veröffentlichungstag und Bekanntmachung des Hinweises auf die Patenterteilung: **01.03.2006**
(21) Anmeldenummer: 02017196.3
(22) Anmeldetag: 31.07.2002
(51) Int. Cl.: F02B 27/02

(54) **Luftansaugkanalsystem für Brennkraftmaschinen**
Air intake system for internal combustion engines
Système d'admission d'air pour moteurs à combustion interne

(30) Priorität: 09.08.2001 DE 10139302
(43) Veröffentlichungstag der Anmeldung: 12.02.2003
(73) Patentinhaber: Pierburg GmbH, 41460 Neuss (DE)
(72) Erfinder: Hüsges, Hans-Jürgen, 47877 Willich (DE)
(74) Vertreter: von Kirschbaum, Alexander

(56) Entgegenhaltungen:
- EP-A- 0 980 968
- DE-A- 19 528 014
- DE-A- 19 756 332
- DE-A- 19 845 140
- PATENT ABSTRACTS OF JAPAN vol. 2000, no. 04, 31. August 2000 (2000-08-31) & JP 2000 008866 A (AISIN SEIKI CO LTD), 11. Januar 2000 (2000-01-11)

## Beschreibung

Die Erfindung betrifft ein Luftansaugkanalsystem für Brennkraftmaschinen, insbesondere für V-Motoren.

Aus DE 197 56 332 ist ein Luftansaugkanalsystem bekannt, bei dem die Länge mehrerer jeweils mit einem Zylinder einer Brennkraftmaschine verbindbarer Luftansaugkanäle stufenlos variiert werden kann. Hierzu sind die spiralförmig ausgebildeten Ansaugkanäle nebeneinander angeordnet. Jeder spiralförmige Luftansaugkanal weist eine mit einem zentralen Innenbereich des Luftansaugsystems verbundene Lufteinlaßöffnung auf, durch die Luft in den spiralförmigen Kanal eintritt und nach Durchströmen des spiralförmigen Kanals zu dem entsprechenden Zylinder geleitet wird. Innerhalb des zentralen Bereichs ist ein rohrförmiges Kanalteil angeordnet, durch das die Innenwand des spiralförmigen Kanals gebildet ist und der die Lufteinlaßöffnung aufweist. Der rohrförmige Kanalteil ist schwenkbar angeordnet, so dass die Lage der Lufteintrittsöffnung variiert werden kann. Durch Schwenken des rohrförmigen Kanalteils kann somit die Länge des Luftansaugkanals, d.h. die von der Luft zu durchströmende Strecke zwischen Lufteintrittsöffnung und Luftaustrittsöffnung, stufenlos variiert werden.

Die einzelnen, die Ansaugkanäle bildenden Kanalteile sind benachbart zueinander bzw. stapelförmig angeordnet, wobei die ausgebildeten Luftansaugkanäle abwechselnd mit der einen oder anderen Reihe der Zylinder des V-Motors verbunden sind. Zum Schwenken der inneren schwenkbaren Kanalteile sind diese mit einer Schwenkachse verbunden. Jeder Luftansaugkanal ist somit im wesentlichen durch ein feststehendes Kanalteil und ein schwenkbares Kanalteil gebildet. Das rohrförmige schwenkbare Kanalteil ist in einer Ausnehmung des feststehenden Kanalteils gelagert. Die Ausnehmung in dem feststehenden Kanalteils weist eine radiale sowie eine axial Anlagefläche auf. In den Randbereichen des schwenkbaren Kanalteils kann ein L-förmiger Dichtring vorgesehen werden. Beim Schwenken des schwenkbaren Kanalteils erfolgt somit ein Gleiten des schwenkbaren Kanalteils an der radialen sowie an der axialen Anlagefläche. Da die beiden Kanalteile aus Kunststoff sind, erfolgt ein Gleiten zwischen zwei Kunststoffteilen. Das Aufeinanderreiben von Kunststoffteilen führt zu großem Verschleiß. Ferner ist durch das Aufeinanderreiben von Kunststoffteilen kein ausreichendes Abdichten zwischen benachbarten Luftansaugkanälen gewährleistet.

Aus DE 195 28 014 ist ebenfalls ein Luftansaugkanalsystem mit einem feststehenden und einem schwenkbaren Kanalteil zum Variieren der Länge des Luftansaugkanals bekannt. Zur Abdichtung des schwenkbaren Kanalteils gegenüber dem feststehenden Kanalteil ist hierin eine labyrinthartige Ausgestaltung der aufeinandergleitenden Bereiche beschrieben. Durch diese Labyrinthdichtung kann zwar die Dichtwirkung zwischen den beiden Kanalteilen verbessert werden, es gleiten jedoch weiterhin zwei Kunststoffteile aufeinander. In der DE 195 28 014 ist ferner das Vorsehen von einer radial oder einer axial verlaufenden Dichtscheibe anstelle eine Labyrinthdichtung vorgeschlagen. Auch bei diesen Ausführungsformen gleiten weiterhin zwei Kunststoffteile aufeinander.

Aufgabe der Erfindung ist es, bei einem Luftansaugkanalsystem mit einer guten Dichtwirkung zwischen zueinander verschwenkbaren Kanalteilen den Verschleiß zu verringern.

Die Lösung der Aufgabe erfolgt erfindungsgemäß durch die Merkmale des Anspruchs 1.

Erfindungsgemäß ist in der Ausnehmung des einen Kanalteils, das eine radiale und eine axiale Anlagefläche zur Aufnahme des schwenkbaren Kanalteils aufweist, ein C-förmiges Gleitelement vorgesehen, das sowohl an der radialen als auch an der axialen Anlagefläche anliegt. Das im Querschnitt C-förmige Gleitelement ist somit zwischen den beiden Kanalteilen sowohl in axialer als auch in radialer Richtung angeordnet. Ein Berühren der beiden Kanalteile im Bereich der Ausnehmung des einen Kanalteils, in dem das andere Kanalteil gelagert ist, ist somit vermieden. Die beiden Kanalteile berühren nur noch das Gleitelement. Das Gleitelement ist vorzugsweise aus Metall, so dass nur geringe Gleitreibung zwischen den beiden aus Kunststoff bestehenden Kanalteilen und dem Gleitelement auftreten. Zusätzlich hat das erfindungsgemäße Gleitelement die Funktion einer Labyrinthdichtung.

Das Gleitelement ist vorzugsweise frei drehbar in die Ausnehmung eines Kanalteils eingelegt. Da das Gleitelement hierbei mit keinem der beiden Kanalteile fest verbunden ist, wird die Reibung zwischen den einzelnen Kanalteilen und dem Gleitelement und damit auch der Verschleiß, insbesondere bei in der Ausnehmung auftretenden unterschiedlichen Kräften, verringert.

Zur Verbesserung der Dichtwirkung des Gleitelements weist eines der beiden Kanalteile eine Nut zur Aufnahme des Gleitelements auf. Hierzu ist an dem Gleitelement ein in die Nut ragender Halteansatz vorgesehen. Die Kombination des Gleitelements mit einer Nut entspricht einer Labyrinthdichtung.

Die Gleitelemente sind vorzugsweise von einer in dem schwenkbaren Kanalteil vorgesehenen Nut gehalten. Es ist somit möglich, die Gleitelemente an den schwenkbaren Kanalteilen vorzumontieren. Dies gewährleistet eine einfache und sichere Montage der einzelnen Kanalteile.

Nachfolgend wird die Erfindung anhand einer bevorzugten Ausführungsform unter Bezugnahme auf die anliegenden Zeichnungen näher erläutert.

Es zeigen:
- Fig. 1: eine schematische Schnittansicht eines Luftansaugkanalsystems für einen 8-Zylinder-V-Motor,

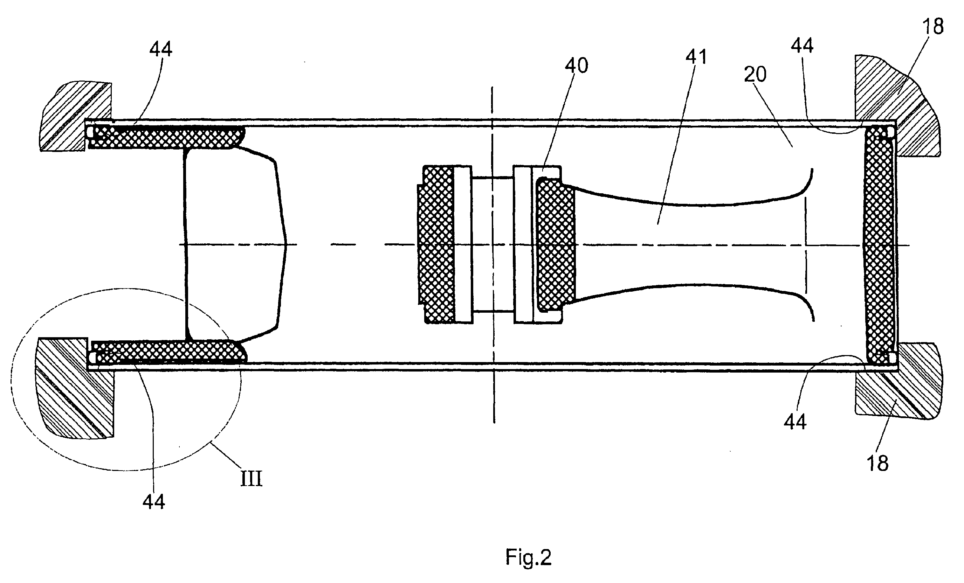

- Fig. 2: eine schematische vergrößerte Darstellung eines schwenkbaren Kanalteils,

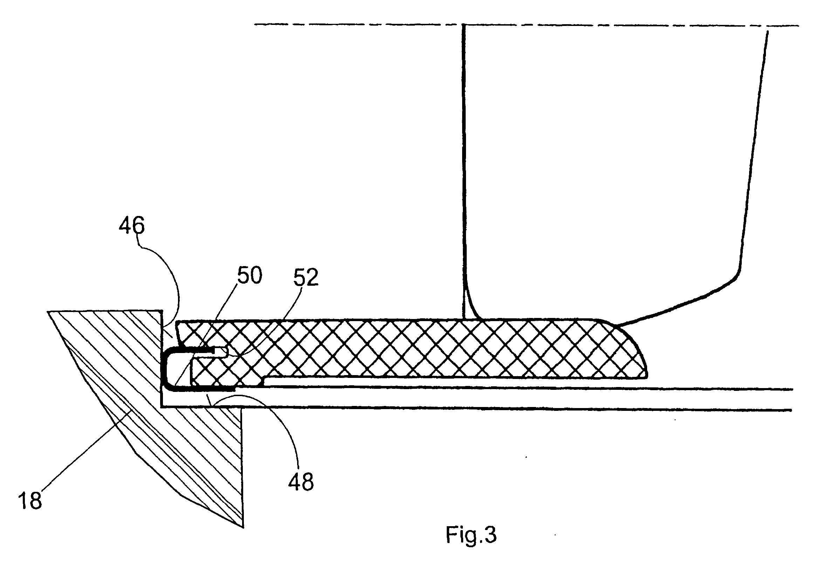

- Fig. 3: eine vergrößerte Darstellung des Bereichs III in Fig. 2,

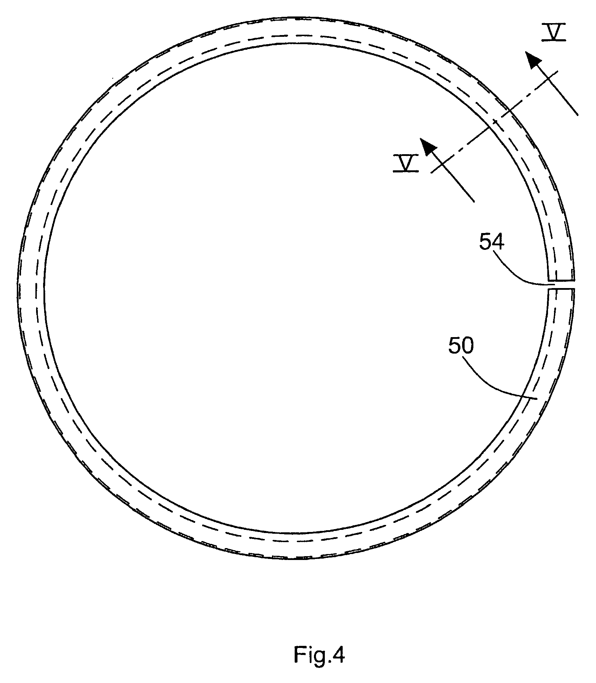

- Fig. 4: eine schematische Draufsicht eines Gleitelements und
- Fig. 5: eine Schnittansicht entlang der Linie V-V in Fig. 4.

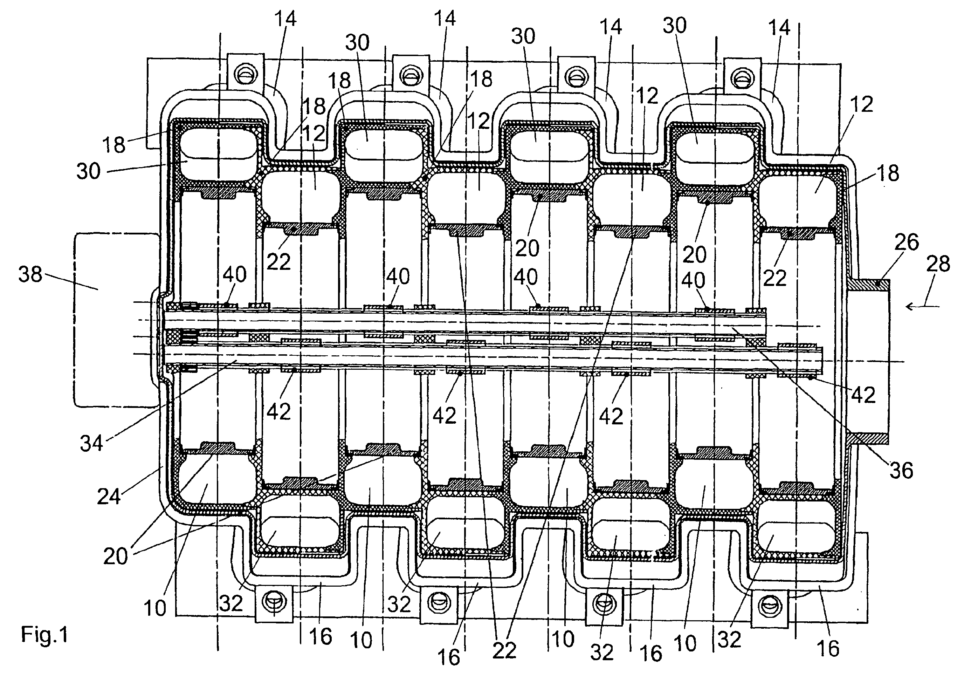

Das Luftansaugkanalsystem weist acht spiralförmig verlaufende Luftansaugkanäle 10,12 auf. Hierbei sind die Ansaugkanäle 10 über Ansätze 14 mit der einen Seite des V-Motors und die Ansaugkanäle 12 über Ansätze 16 mit der anderen Seite des V-Motors verbunden. Die einzelnen Ansaugkanäle sind jeweils durch ein erstes, im dargestellten Ausführungsbeispiel feststehendes Kanalteil 18 und ein zweites, schwenkbares Kanalteil 20,22 gebildet. Mit Ausnahme der beiden in der Figur am linken und rechten Rand vorgesehenen Kanalteile sind sämtliche erste Kanalteile 18 identisch aufgebaut und, wie in Fig. 1 dargestellt, nebeneinander angeordnet bzw. aufeinander gestapelt. Die ersten Kanalteile 18 sind in einem aus zwei Gehäusehälften bestehenden Gehäuse 24 angeordnet. Die schwenkbaren zweiten Kanalteile 20 und 22 sind ebenfalls identisch.

Die den einzelnen Ansaugkanälen 10,12 zuzuführende Luft wird über einen Ansaugstutzen 26 in Richtung eines Pfeils 28 in den inneren Bereich des Luftansaugsystems geleitet. Der innere Bereich ist durch die nebeneinander angeordneten schwenkbaren Kanalteile 20,22, die jeweils im wesentlichen kreiszylinderförmig sind, gebildet. Je nach Ausführungsform sind ggf. zusätzliche Ansaugöffnungen mit den einzelnen Luftansaugkanälen 10,12 verbunden, so dass sowohl durch den zentralen Bereich des Luftansaugkanalsystems als auch durch die zusätzlichen Zuführkanäle Luft in die Luftansaugkanäle 10,12 gelangt. Aus dem zentralen Bereich des Luftansaugkanalsystems gelangt die Luft durch in den schwenkbaren Kanalteilen 20,22 vorgesehene Lufteinlaßöffnungen in die entsprechenden Luftansaugkanäle 10,12. Aus diesen tritt die Luft durch Luftauslaßöffnungen 30 bzw. 32 aus und wird durch nicht dargestellte Kanäle zu den entsprechenden Zylindern geführt.

Zum Variieren der Länge der Luftansaugkanäle 10,12 sind die schwenkbaren Kanalteile 20,22 mit Schwenkachsen 34,36 fest verbunden. Durch Schwenken der Schwenkachsen 34,36 mit Hilfe eines Stellelements 38 werden die Lufteinlaßöffnungen der schwenkbaren Kanalteile 20,22 in ihrer Lage verändert, so dass die Luft aus dem zentralen Bereich an einer anderen Stelle in die spiralförmigen Luftansaugkanäle 10,12 eintritt und somit einen kürzeren oder längeren Weg zurücklegen muß.

Die zweiten Kanalteile 20 sind über Stege mit Halterungen 40 verbunden und bilden ein Verstellelement. Die Halterungen 40 sind mit der Schwenkachse 36 über ein Rohrprofil (Vierkant) verbunden. Die Verbindung zwischen den Halterungen 40 und der Schwenkachse 36 erfolgt zusätzlich über Blattfedern. Entsprechend sind die Kanalteile 22 über Stege und Halterungen 42 mit der Schwenkachse 34 verbunden. Die Kanalteile 20 bzw. 22 werden somit stets gemeinsam verschwenkt, so dass die Luftansaugkanäle 10 bzw. 12 je Seite des V-Motors gleich lang sind.

Das schwenkbare Kanalteil 20 ist zwischen zwei benachbarten feststehenden Kanalteilen 18 angeordnet. Zur Definition der Lage des schwenkbaren Kanalteils 20 weisen die feststehenden Kanalteile 18 Ausnehmungen 44 auf. Die Ausnehmungen 44 weisen eine radiale Anlagefläche 46 und eine axiale Anlagefläche 48 auf.

Das erfindungsgemäße Gleitelement 50 ist in einer in dem schwenkbaren Kanalteil 20 vorgesehenen umlaufenden Nut, die sich in radialer Richtung erstreckt, gehalten. Da es sich bei dem Gleitelement 50 vorzugsweise um ein ringförmiges, aus Bandmaterial hergestelltes Gleitelement handelt, das den gesamten zylindrischen Kanalteil 20 umgibt, und das Gleitelement eine Öffnung 54 aufweist, kann das Gleitelement 50 auf einfache Weise durch Aufweiten in die Nut 52 eingesetzt werden. Das Einsetzen des Gleitelements erfolgt somit wie bei einem Kolbenring.

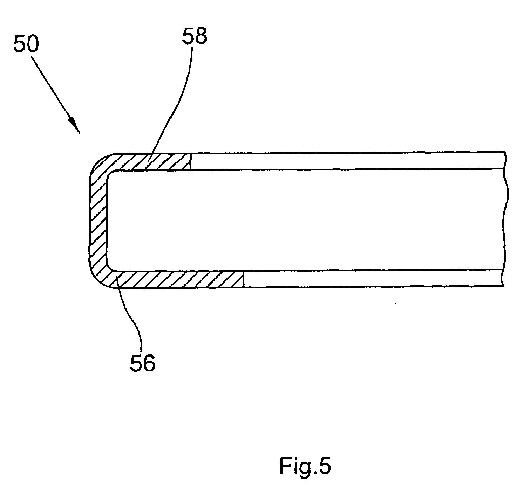

Das im dargestellten Ausführungsbeispiel C-förmige Gleitelement 50 besteht aus einem L-förmigen Teil 56 und einem Halteansatz 58 (Fig. 5). Die beiden Schenkel des L-förmigen Teils 56 des Gleitelements 50 liegen an der radialen Anlagefläche 46 bzw. an der axialen Anlagefläche 48 an. Da das Gleitelement 50 in die Nut 52 eingesteckt ist, erfüllt das Gleitelement neben der Funktion, die Reibung zwischen den Kanalteilen 18,20 zu verringern, auch die Funktion des Abdichtens zwischen benachbarten Kanälen. Das Gleitelement 50 bildet zusammen mit der Nut 52 eine Labyrinthdichtung.

## Patentansprüche

1. Luftansaugkanalsystem für Brennkraftmaschinen, mit
mehreren jeweils mindestens durch ein erstes und ein zweites Kanalteil (18;20;22) ausgebildeten Luftansaugkanälen (10,12),
einer in einem der Kanalteile (20,22) vorgesehenen Lufteinlaßöffnung und einer am anderen Kanalteil (18) vorgesehenen Luftauslaßöffnung (30,32),
wobei mindestens eines der Kanalteile (20,22) zum Variieren der Länge des jeweiligen Luftansaugkanals (10,12) um eine Schwenkachse (34,36) schwenkbar ist, und
wobei das schwenkbare Kanalteil (20,22) in einer eine radiale und eine axiale Anlagefläche (46,48) aufweisenden Ausnehmung (44) des anderen Kanalteils (18) gelagert ist,
**gekennzeichnet durch**
ein an der radialen und axialen Anlagefläche (46,48) anliegendes, im radialen Querschnitt C-förmiges Gleitelement (50).

2. Luftansaugkanalsystem nach Anspruch 1, **dadurch gekennzeichnet, dass** das Gleitelement (50) ein L-förmiges Teil (56), dessen Schenkel an der radialen bzw. axialen Anlagefläche (46,48) anliegen, aufweist.

3. Luftansaugkanalsystem nach Anspruch 1 oder 2, **dadurch gekennzeichnet, dass** eines der Kanalteile (20,22) eine vorzugsweise radial verlaufende Nut (52) zur Aufnahme des Gleitelements aufweist.

4. Luftansaugkanalsystem nach Anspruch 3, **dadurch gekennzeichnet, dass** das Gleitelement (50) einen in die Nut (52) ragenden Halteansatz (58) aufweist.

5. Luftansaugkanalsystem nach einem der Ansprüche 1-4, **dadurch gekennzeichnet, dass** das Gleitelement (50) kreisbogenförmig oder ringförmig ist.

6. Luftansaugkanalsystem nach einem der Ansprüche 1-5, **dadurch gekennzeichnet, dass** das Gleitelement (50) aus Bandmaterial hergestellt ist.

7. Luftansaugkanalsystem nach einem der Ansprüche 1-6, **dadurch gekennzeichnet, dass** das schwenkbare Kanalteil (20,22) eine bezüglich der Schwenkachse (34,36) axial verlaufende Kanalwand bildet und in den beiden bogenförmigen Randbereichen jeweils ein Gleitelement (50) vorgesehen ist.

## Claims

1. An air intake channel system for internal combustion engines, comprising
a plurality of air intake channels (10,12) respectively formed by at least a first and a second channel portion (18;20;22),
an air inlet opening provided in one of the channel portions (20,22) and an air outlet opening (30,32) provided on the other channel portion (18),
at least one of the channel portions (20,22) being pivotal about a pivot axis (34,36) to vary the length of the respective air intake channel (10,12), and
the pivotal channel portion (20,22) being supported in a recess (44) of the other channel portion (18), said recess comprising a radial and an axial abutment surface (46,48),
**characterized by**
a slide element (50) abutting on the radial and the axial abutment surface (46,48), which is C-shaped in radial cross section.

2. The air intake channel system according to claim 1, **characterized in that** the slide element (50) comprises an L-shaped portion (56) the legs of which abut on the radial abutment surface and the axial abutment surface (46,48), respectively.

3. The air intake channel system according to claim 1 or 2, **characterized in that** one of the channel portions (20,22) comprises a preferably radially extending groove (52) for receiving the slide element.

4. The air intake channel system according to claim 3, **characterized in that** the slide element (50) comprises a retaining lug (58) projecting into the groove (52).

5. The air intake channel system according to one of claims 1 to 4, **characterized in that** the slide element (50) has the shape of a circular arc or of an annulus.

6. The air intake channel system according to one of claims 1 to 5, **characterized in that** the slide element (50) is made of strip material.

7. The air intake channel system according to one of claims 1 to 6, **characterized in that** the pivotal channel portion (20,22) forms a channel wall extending axially with respect to the pivot axis (34,36) and one slide element (50) is provided in each of the two arcuate edge portions.

## Revendications

1. Système de conduits d'admission d'air pour moteurs à combustion interne comprenant
plusieurs conduits d'admission d'air (10, 12) réalisés chacun au moins par un premier et par un second élément de conduit (18 ; 20 ; 22),
une ouverture d'admission d'air prévue dans l'un des éléments de conduit (20, 22) et une ouverture d'échappement d'air (30, 32) prévue sur l'autre élément de conduit (18),
au moins l'un des éléments de conduit (20, 22) pouvant pivoter autour d'un axe de pivotement (34, 36) pour modifier la longueur du conduit d'admission d'air respectif (10, 12) et
l'élément de conduit pivotant (20, 22) étant logé dans un creux (44) de l'autre élément de conduit (18), qui comporte une surface de contact radiale et une surface de contact axiale (46, 48),
**caractérisé par**
un élément coulissant en forme de C (50) en coupe transversale radiale s'appliquant sur la surface de contact radiale et sur la surface de contact axiale (46, 48).

2. Système de conduits d'admission d'air suivant la revendication 1, **caractérisé en ce que** l'élément coulissant (50) comporte une partie en forme de L (56), dont les branches s'appliquent sur la surface de contact radiale et sur la surface de contact axiale (46, 48).

3. Système de conduits d'admission d'air suivant l'une des revendications 1 et 2, **caractérisé en ce que** l'un des éléments de conduit (20, 22) comporte une gorge (52) s'étendant de préférence dans la direction radiale pour recevoir l'élément coulissant.

4. Système de conduits d'admission d'air suivant la revendication 3, **caractérisé en ce que** l'élément coulissant (50) comporte un embout de retenue (58) pénétrant dans la gorge (52).

5. Système de conduits d'admission d'air suivant l'une des revendications 1 à 4, **caractérisé en ce que** l'élément coulissant (50) est en forme d'arc de cercle ou en forme d'anneau.

6. Système de conduits d'admission d'air suivant l'une des revendications 1 à 5, **caractérisé en ce que** l'élément coulissant (50) est fabriqué à partir d'un matériau en bande.

7. Système de conduits d'admission d'air suivant l'une des revendications 1 à 6, **caractérisé en ce que** l'élément de conduit pivotant (20, 22) forme une paroi de conduit s'étendant dans la direction axiale par rapport à l'axe de pivotement (34, 36) et un élément coulissant (50) est prévu dans chacune des deux zones de bordure en forme d'arc.
